# EUROPEAN PATENT SPECIFICATION

(11) **EP 2 543 279 B1**
(45) Date of publication and mention of the grant of the patent: **04.03.2015**
(21) Application number: 12175399.0
(22) Date of filing: 06.07.2012
(51) Int. Cl.: A47B 21/00, A47B 37/02

(54) **Conference table unit**
Konferenztischeinheit
Unité de table de conférence

(30) Priority: 08.07.2011 SE 1150655
(43) Date of publication of application: 09.01.2013
(73) Proprietor: EFAB, ERIK FRISELL AB, 122 40 Enskede (SE)
(72) Inventor: Frisell, Jan, 122 40 Enskede (SE)
(74) Representative: Engdahl, Stefan

(56) References cited:
- WO-A1-99/29211
- DE-U1-202007 000 637
- FR-A1- 2 885 423
- JP-A- 2001 204 554
- US-A1- 2005 242 534
- US-A1- 2009 165 680

## Description

### Field of the invention

The present invention relates to a conference table unit, and a conference table comprising said conference table unit.

### Background

Different kinds of equipment are used today to equip meeting rooms with different functions such as for example connectors for power supply, network connections, data/ video projectors for showing images/films on various surfaces in the meeting room etc. For example, a conference table unit is known from WO99/29211.

These various desired functions in the meeting rooms have meant that a lot of planning associated with furnishing of the meeting rooms is required both in terms of design of the rooms but also in connection with piping for the various wires required for power supply but also wires for connection to and connection of the different components to each other.

Furthermore, when the meeting room is completed it is very difficult to change the furnishing or placement of the various functions as the already completed wiring and other limit the possibilities of modification of the meeting room if the requirements or the planned use of the meeting room changes.

Hence, there is a need for more flexible solutions which facilitate furnishing and modification of the interior of meeting rooms.

### Summary of the invention

The present invention, as defined by claim 1, provides a conference table unit which meets the needs and desires established above.

The conference table unit is intended for placement under an opening in a table top. The conference table unit comprises: attachment devices attached to the conference table unit and adapted to abut the underside of the table top and attach the conference table unit to the table top, an upper surface adapted to be arranged in the opening and substantially parallel to the table top; at least one connector for electricity and/or data arranged in said conference table unit such that it is accessible through said opening in the table top; a projector arranged so that beams directed from the projector pass through said opening, and to which projector information is transferred through a connection in the conference table unit which is accessible through said opening; a mirror rotatably arranged about an axis substantially parallel to the upper surface said mirror being arranged to reflect the beam from the projector to a wall or ceiling surface where the image from the projector is to be shown; connecting means for connecting electricity to the connector or projector of the conference table unit; and an attachment point comprising a plate on which the projector is arranged, said plate is arranged in an angle relative the upper surface; a support arm having an end to which the plate is attached; and an attachment device for the plate arranged to allow said angle to be adjusted by means of the plate being rotatable in its attachment point at said end of the support arm.

The conference table unit according to the present invention caters to the needs described above by a cleverly designed conference table unit intended to be mounted on the underside of a table top. The conference table unit comprises both connectors for electricity and/or data video projector and requires only a connection for power supply and a network connection. The beams from the projector pass through the opening in the table top where they are reflected in the mirror in the direction of the desired projection surface. By the design of the conference table unit wherein the projector is included, the wiring to a conventional video data projector, commonly arranged in the ceiling, in walls and/or ceiling is eliminated.

The conference table unit has further advantages as it allows for easy reconfiguration of the various functions in the meeting room as the conference table, where the conference table unit is attached, can be moved without interference with wiring etc. When moving, all included functions and equipment move along with the conference table and the position of the projected image can easily be changed by moving or turning the conference table to a desired position. The need for specially trained staff for modifying the meeting room is thereby also minimized. The conference table with associated conference table unit can naturally also be moved to completely different spaces in a considerably easier manner as it can easily be mounted in a new desired location.

The different parts of the conference table unit can also be connected and tested before delivery, which ensures quality and reduces the risk for delays and costly installations. Further, the short wire lengths between the different units in the conference table unit provide better quality of sound, image and control signals between the different units.

An additional advantage is plainly visual, as the number of visible wires and equipment is minimized and the main part of these different units is placed on the underside of the conference table.

According to the invention, the projector is arranged on a plate which is arranged at an angle relative to the table top which the conference table unit is adapted to be attached to. This is advantageous as it means that the projector is directed toward the opening where the mirror is arranged so that the beam is only reflected one time, which is advantageous for the final quality of the image and for easy placement and attachment of the projector.

According to the invention, the angle relative the table top is adjustable by of means of an attachment device. This embodiment is advantageous as it makes it possible to adjust the angular position of the projector in relation to the table top such that any distortion, for example keystone distortion, of image dimensions is minimized or eliminated. Hence, this embodiment is advantageous as it allows for correct imaging.

In one embodiment of the conference table unit, the mirror is rotatable relative the conference table unit by means of a engine which is controlled by controls arranged in the conference table unit in such a way that they are accessible through an opening in the table top. This design allow for accurate setting while the mirror in off-mode can be used as a cover for closing the opening in the table top.

In one embodiment of the conference table unit the conference table unit is at least partially covered by a housing. The housing has several advantages as it protects the components within the housing and allows for mounting of all parts included in the conference table unit before final delivery of the product. The housing also provides the supporting structure of the unit.

One embodiment of the conference table unit has a substantially rectangular shape. The rectangular shape facilitates the production of the included parts. Conference tables usually have a rectangular shape and a conference table unit of corresponding rectangular shape facilitates mounting into the table top as well as accessibility of the various functions in the conference table unit for the persons sitting around the conference table.

One embodiment of the conference table unit comprises a frame which is adapted to surround said opening and to be connected to the conference table unit from the upper surface of the table top. This embodiment is advantageous as in co-operation with lower portion of the conference table unit it assists the suspension of the conference table unit from the underside of table top. It also wraps the opening which provides a visually pleasing appearance and reduces the risk of damages or wear around the edge of the opening in the table top.

In one embodiment of the conference table unit, the axis around which the mirror is rotatable is attached to said frame. This is an advantageous embodiment as the mirror, whose back side can be configured as a cover, can be arranged so that it in it's down position lies in a plane with the upper side of the table top and thereby closes the opening in the table top.

One embodiment of the conference table unit comprises one or several covers which are rotationally arranged, whereby the cover or covers in closed position cover said opening which is surrounded by the frame. This embodiment is important as it makes it possible to close the opening in the table top when the surface of the table is used for other purposes. The surface of the table can thereby be used in a flexible way.

The present invention also relates to a conference table comprising a conference table unit, according to any one to the embodiments described above, mounted in an opening arranged in the table top. The shape of the opening corresponds to the shape of the conference table unit and the conference table unit is mounted on the underside of the table top under said opening.

### Short description of the figures

Different views of conference table units are illustrated in the enclosed figures where:
- Figure 1: illustrates a first perspective side view of a conference table unit not according to the invention.
- Figure 2: illustrates a second perspective side view of a conference table unit not according to the invention
- Figure 3: illustrates a perspective view of the conference table unit not according to the invention from below.
- Figure 4: illustrates a table with mounted conference table unit not according to the invention.
- Figure 5: illustrates a perspective view of a conference table unit according to the invention.

### Detailed description

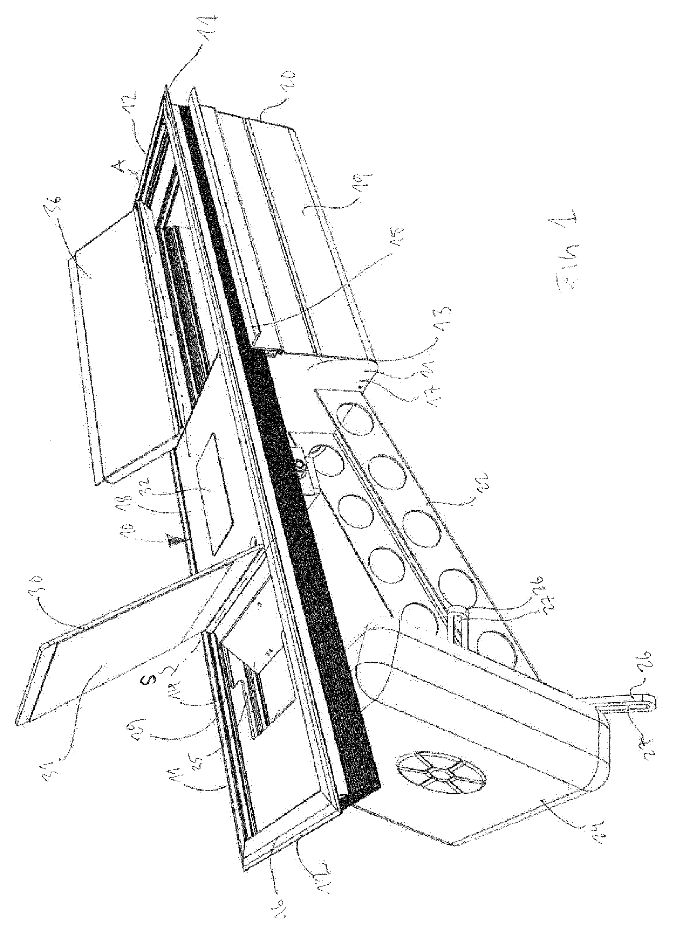

In Figure 1, 2 and 3 different views of an embodiment of a conference table unit 10 not according to the invention are illustrated.

The conference table unit 10 is adapted to be arranged on the underside of a table top adjacent to an opening in the table top. The shape of the opening shall correspond to the shape of the conference table unit so that at least selected parts of the conference table unit 10 become accessible from the upper side through the opening in the table top. The embodiment of the conference table unit shown in the figures has a substantially rectangular shape in the plane of the table top with two longitudinal sides 11 and two transverse sides 12.

The conference table unit consists of two parts, a lower part 13 and an upper part 14. The lower part 13, which is adapted to be mounted from the underside of table top, has a number of flanges 15 which are adapted to abut the underside of the table top. The lower part 13 is attached against the underside of the table top by some kind of fastening means such as, for example, screws which extend through the flanges 15 or an adhesive bond which adheres the underside of the table top and the flanges 15 of the conference table unit.

The upper side 12 of the conference table unit is constituted by a frame 16 which extends around the opening in the table so that the edge of the opening is hidden and any space between the conference table unit 10 and the opening is sealed. The upper part 14 is mounted from the upper side of the table top after that the lower part 13 has been secured in a position adapted therefore under the opening and the lower 13 respectively the upper part 14 are interconnected during mounting. The frame 16 can then constitute an additional attachment of the conference table unit 10 to the table top.

The interconnection can for example be by that the upper part 14 is pressed into the lower part 13, alternatively by any type of snap or screw joints, not shown.

The lower part 13 comprises a box-shaped part 17 which extends downwards relative the table top and is arranged in one end of the conference table unit 10. The box-shaped part 17 contains a number of different outlets, not shown in the enclosed figures, attached in the box-shaped part 17, which forms a protective enveloping housing around the outlets which are used for example for electricity and data. The outlets are accessible from the upper side of the table top as the box-shaped part 17 is open towards the upper side 18 of the conference table unit 10. In the illustrated embodiment the box-shaped part 17 constitutes approximately half of length of the conference table unit but its size can be varied dependent on the desired number of electrical outlets which it shall accommodate and the shape of the conference table unit and size of the table top. The box-shaped part 17 has two longitudinal sides 19 which mainly coincide with the longitudinal sides 11 of the conference table unit as well as a first 20 respectively second 21 end surface which are perpendicular relative to the longitudinal sides 19. Also, the shape of the box-shaped part can be varied dependent of desired inner volume and depth.

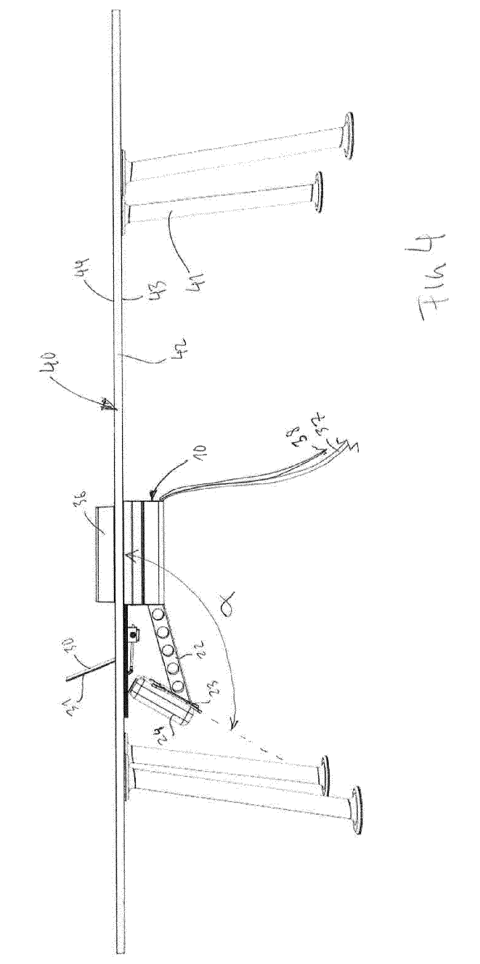

From the other end surface 21 of the box-shaped part, arranged in proximity of the centre of the conference table unit, a support arm 22 with a U-shaped cross section extends obliquely downwards away from the box-shaped part 17. An attachment point 23 for a projector 24 is arranged at the outer end of the support arm 22. The projector 24 is fixed to the attachment point 23 with appropriate screws, not shown. The attachment point 23 comprises a plate 25 and four elongated pieces 26 provided with elongated holes 27 through which the not shown screws extend. The elongated holes 27 allow for attaching projectors of different sizes to the attachment point 23. The attachment point 23 is provided in an angle α, shown in figure 4, relative the normally horizontal table top so that the beams from the projector shall pass through the opening in the table top. The angle a is commonly between 95° and 135°. The attachment point 23 allows for adjusting the position of the projector relative the plate 25 due to the elongated pieces, which is important for obtaining a desired beam direction from the objective 28 of the projector. When the correct position of the projector 24 relative the attachment point 23 and the conference table unit 10 is obtained, no additional adjustment of the position of the projector 24 relative the attachment point 23 normally occurs. In one alternative embodiment not according to the invention, the angle (a) of the attachment point (23) relative the table top (42) is adjustable by of means of said attachment point (23).

According to the invention, the conference table unit comprises an attachment device for the plate which allows the angle a to be adjusted by means of that the plate 25 is rotatable in its attachment/fixing point at the end of the support arm 22.

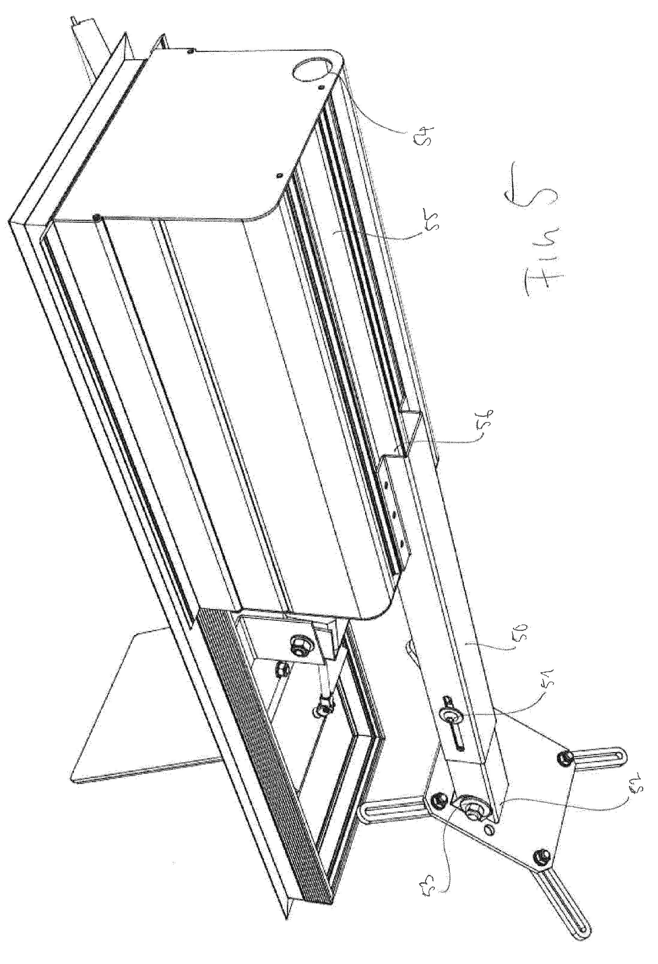

An alternative embodiment of a support arm 50 is shown in figure 5. The support arm 50 extends mainly horizontally from its attachment point in the box-shaped part's underside. The length of the support arm 50 can be adjusted by means of an adjustment device 51 which allows for the conference table unit to be adjusted to various projector sizes. At the outer end 52 of the support arm 50 there is also a rotatable attachment point 53 for the plate 25 which provides additional flexibility for the attachment of the projector.

The projector 24 is of a conventional type but may have various configurations and dimensions depending on the desired properties of the conference table unit. It is however suitable to choose a projector which takes up a limited amount of space given the arrangement of the conference table unit under the table top.

The upper surface 18 of the lower part 13 is adapted to be arranged in the opening of the table top. The upper side18 is substantially parallel to the upper side of the table top and arranged in, or in the proximity of, the plane of the table top. In the shown embodiment the upper side 18 is substantially rectangular. Other shapes are also possible provided that they correspond to the shape of the opening. The upper side 18 comprises a first notch 29 arranged in connection with the projector 24 so that the beams from the objective 28 of the projector can pass through said first notch 29. A first cover 30, with a shape corresponding to the shape of the first notch 29, is rotatably arranged around an axis S fixed to the upper side 18 of the conference table unit. The axis S is arranged along the edge of the first notch 29 so that the cover 30 can be rotated from a position in which it is arranged horizontally and covers the notch 29 to various positions in which the notch 29 is open and the beam from the objective 28 of the projector can pass through the notch 29. A mirror 31 is arranged on the side of the cover 30 which faces the first notch 29 and the projector 24, such that the beam which passes through the notch 29 incidents on the mirror 31 which reflects the beam to a projection surface. Therefore the axis S is commonly substantially parallel to the desired projecting surface, which for example can be one of the wall surfaces or the ceiling surface in the meeting room alternatively a separate screen surface, so that correct imaging can be obtained. The angle of the cover 31 relative the table surface is used for adjusting the position of the projected image in height and the more the first cover is opened the higher the projected image will end up.

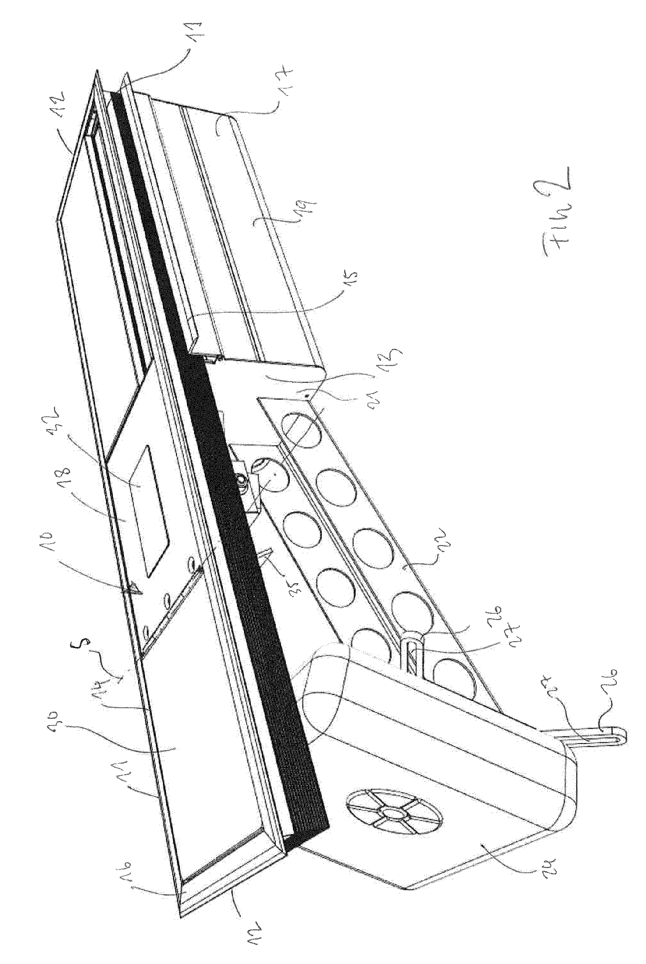

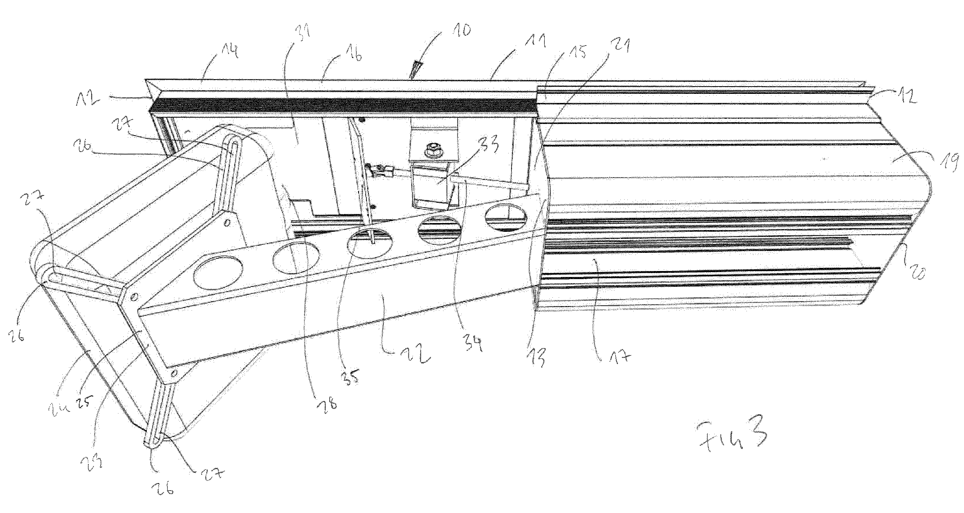

In connection to the first cover 30 there is also arranged an actuator 32 on the upper side of the lower part for adjusting the angle of the cover 30 relative the upper side of conference table unit 18. In the shown embodiment the first cover 30 is rotated by means a small engine 33 arranged above the support arm 22. The engine 33 is connected to a longitudinal axis 34 which extends from the engine 33 to the first cover 30, where it (engine) is attached to a plate 35 fixed in an angle relative to the first cover 30, such that an axial movement generated by the engine 33 is transferred by the longitudinal axis 34 to change the angle of the position of the cover 30. It is suitable that the engine 33 is a small electrical engine and is controlled by actuators 32 which are placed on upper side 18 of the conference table unit and associated control unit/computer, not shown, which is programmed so that the engine 33 supplies very little force when the cover 30 is to be closed, such that simple and efficient pinch protection is obtained. Figure 1 and 3 show the conference table unit with the first cover 30 closed, while figure 2 and 4 shows the first cover 30 open.

In the upper side 18 of the conference table unit there is arranged a second cover 36. This second cover 36 is rotatable around an axis A which is substantially parallel to one of longitudinal sides 11 of the conference table units. The shape of the second cover 36 corresponds to the opening of the box-shaped part and closes in closed position the box-shaped part to allow for using the whole table surface as work surface and give the table surface an aesthetically appealing appearance. The opening and closing of the second cover 36 is manual although automated solutions are also possible. Figure 1 show the conference table unit with the second cover 36 closed, while figure 2 and 4 show the second cover 36 open.

The conference table unit has a connecting wire 37 which is connected to an external power source, not shown, to provide electricity to the outlets of the conference table unit, the projector 24 and engine 33 for maneuvering the first cover 30 and usually a network connection 38 which allows for connection to internal and external networks. These two connecting wires, 37 and 38, are lead in the box-shaped part through an elongated opening 55 in the bottom of the box-shaped part, illustrated in figure 5. The connecting wires 37 and 38 are the only ones required for correctly connecting and plugging in the conference table unit so that the various functions work in a designated way. Wireless connections can also be used.

The conference table unit 10 further comprises a wire channel which extends between the projector 24 and outlets in the box-shaped part 17. It is suitable that the wire channel is arranged in the U-shaped support arm, close to the bottom of the U-shaped support arm, where it is well protected and to then continue in connection with the bottom of the box-shaped part 17. In the conference table unit shown in figure 5, the wires pass from the box-shaped part through an opening 56 i the end part of the support arm of the support arm of the projector. The wire channel contains wire, or wires, for supplying power to the projector 24 and the outlets as well as wire or wires for transferring data to the projector 24. Figure 5 also shows a circular opening 54 in the box-shaped part 17. This opening 54 can be used if any other additional wire is to be drawn into the conference table unit.

Finally, figure 4 shows a conference table 40, which comprises four legs 41 and a table top 42 with an upper side 43 and an underside 44 where the conference table unit 10 is mounted in a hole sawn up therefore in the centre of the conference table.

The present invention has been described above with reference to an embodiment of the conference table unit. Several parameters can be modified to adapt the conference table unit to various specific areas of use and the scope of protection is not limited to this embodiment but is determined by the enclosed patent claims.

## Claims

1. A conference table unit (10) intended for placement under an opening in a table top, wherein the conference table unit (10) comprises:
attachment devices attached to the conference table unit and adapted to abut the underside of the table top and attach the conference table unit (10) to the table top
an upper surface (18) adapted to be arranged in the opening and substantially parallel to the table top;
at least one connector for electricity and/or data arranged in said conference table unit (10) such that it is accessible through said opening in the table top;
a projector (24) arranged so that beams directed from the projector pass through said opening, and to which projector information is transferred through a connection in the conference table unit (10) which is accessible through said opening;
a mirror (31) rotatably arranged about an axis (S) substantially parallel to the upper surface (18) said mirror (31) being arranged to reflect the beam from the projector (24) to a wall or ceiling surface where the image from the projector (24) is to be shown;
connecting means (37) for connecting electricity to the connector or projector (24) of the conference table unit; and
an attachment point (23) comprising a plate (25) on which the projector is arranged, said plate (25) is arranged in an angle (α) relative the upper surface;
**characterized by** a support arm (22) having an end to which the plate (25) is attached; and
an attachment device for the plate (25) arranged to allow said angle (α) to be adjusted by means of the plate (25) being rotatable in its attachment point at said end of the support arm (22).

2. The conference table unit (10) according to claim 1, **characterized in that** the mirror (31) is arranged to rotate relative the conference table unit by means of an engine (33) which is controlled by controls (32) arranged in the conference table unit (10) such that they are accessible through the opening in the table top (42).

3. The conference table unit (10) according to claim 1, **characterized in that** it is at least partially covered by a housing (17).

4. The conference table unit (10) according to claim 1, **characterized in that** it is substantially rectangular in shape.

5. The conference table unit (10) according to claim 1, **characterized in that** it comprises a frame (16) which is adapted to surround said opening and to be connected to the conference table unit (10) from the upper side of the table top (42).

6. The conference table unit (10) according to claim 5, **characterized in that** it comprises one or several rotatably arranged covers (36), wherein the cover or covers in closed position close said opening.

7. A conference table (40) comprising the conference table unit (10) according to any of claims 1 to 6, wherein there is arranged an opening in the conference table (40) the shape of which corresponds to the shape of the conference table unit (10) and under which the conference table unit (10) is arranged.

## Patentansprüche

1. Konferenztischeinheit (10), die dafür vorgesehen ist, unter einer Öffnung in einer Tischplatte angeordnet zu werden, wobei die Konferenztischeinheit (10) Folgendes umfasst:
Befestigungsvorrichtungen, die an der Konferenztischeinheit befestigt sind und dafür ausgebildet sind, an der Unterseite der Tischplatte anzuliegen und die Konferenztischeinheit (10) an der Tischplatte zu befestigen,
eine Oberseite (18), die dafür ausgebildet ist, in der Öffnung und im Wesentlichen parallel zu der Tischplatte angeordnet zu werden;
mindestens einen Verbinder für Elektrizität und/oder Daten, der so in der Konferenztischeinheit (10) angeordnet ist, dass er durch die Öffnung in der Tischplatte hindurch zugänglich ist;
einen Projektor (24), der so angeordnet ist, dass Strahlen, die den Projektor verlassen, die Öffnung passieren, und wobei Informationen über eine Verbindung in der Konferenztischeinheit (10), die durch die Öffnung hindurch zugänglich ist, zu dem Projektor übertragen werden;
einen Spiegel (31), der um eine Achse (S), die im Wesentlichen parallel zur Oberseite (18) verläuft, drehbar angeordnet ist, wobei der Spiegel (31) dafür ausgebildet ist, den Strahl aus dem Projektor (24) zu einer Wand- oder Deckenfläche zu reflektieren, wo das Bild aus dem Projektor (24) gezeigt werden soll;
ein Verbindungsmittel (37) zum Verbinden von Elektrizität mit dem Verbinder oder Projektor (24) der Konferenztischeinheit; und
einen Befestigungspunkt (23), der eine Platte (25) umfasst, auf welcher der Projektor angeordnet ist, wobei die Platte (25) in einem Winkel (α) relativ zur Oberseite angeordnet ist;
**gekennzeichnet durch** einen Stützarm (22) mit einem Ende, an dem die Platte (25) angebracht ist; und
eine Befestigungsvorrichtung für die Platte (25), die dafür ausgebildet ist, eine Verstellung des Winkels (α) mittels der Platte (25) zu erlauben, die an ihrem Befestigungspunkt am Ende des Stützarms (22) drehbar ist.

2. Konferenztischeinheit (10) nach Anspruch 1, **dadurch gekennzeichnet, dass** der Spiegel (31) dafür ausgebildet ist, sich relativ zur Konferenztischeinheit mittels eines Mechanismus (33) zu drehen, der durch Steuerelemente (32) gesteuert wird, die so in der Konferenztischeinheit (10) angeordnet sind, dass sie durch die Öffnung in der Tischplatte (42) hindurch zugänglich sind.

3. Konferenztischeinheit (10) nach Anspruch 1, **dadurch gekennzeichnet, dass** sie mindestens teilweise durch ein Gehäuse (17) abgedeckt ist.

4. Konferenztischeinheit (10) nach Anspruch 1, **dadurch gekennzeichnet, dass** sie eine im Wesentlichen rechteckige Form hat.

5. Konferenztischeinheit (10) nach Anspruch 1, **dadurch gekennzeichnet, dass** sie einen Rahmen (16) umfasst, der dafür geeignet ist, die Öffnung zu umgeben und mit der Konferenztischeinheit (10) von der Oberseite der Tischplatte (42) her verbunden zu werden.

6. Konferenztischeinheit (10) nach Anspruch 5, **dadurch gekennzeichnet, dass** sie eine oder mehrere drehbar angeordnete Abdeckungen (36) umfasst, wobei die Abdeckung oder die Abdeckungen in der geschlossenen Position die Öffnung verschließen.

7. Konferenztisch (40), der die Konferenztischeinheit (10) nach einem der Ansprüche 1 bis 6 umfasst, wobei eine Öffnung in dem Konferenztisch (40) angeordnet ist, deren Form der Form der Konferenztischeinheit (10) entspricht und unter der die Konferenztischeinheit (10) angeordnet ist.

## Revendications

1. Unité de table de conférence (10) destinée à être placée sous une ouverture dans un dessus de table, dans laquelle l'unité de table de conférence (10) comprend :
des dispositifs de fixation fixés à l'unité de table de conférence et adaptés pour buter contre la surface inférieure du dessus de table et fixer l'unité de table de conférence (10) au dessus de table ;
une surface supérieure (18) adaptée pour être agencée dans l'ouverture et sensiblement parallèle au dessus de table ;
au moins un connecteur pour l'électricité et/ou les données agencé dans ladite unité de table de conférence (10) de telle sorte qu'il est accessible par le biais de ladite ouverture dans le dessus de table ;
un projecteur (24) agencé de sorte que des faisceaux dirigés depuis le projecteur passent à travers ladite ouverture, et auquel projecteur des informations sont transférées par le biais d'une connexion dans l'unité de table de conférence (10) qui est accessible par le biais de ladite ouverture ;
un miroir (31) agencé de manière rotative autour d'un axe (S) sensiblement parallèle à la surface supérieure (18), ledit miroir (31) étant agencé pour réfléchir le faisceau à partir du projecteur (24) vers une surface de paroi ou de plafond où l'image en provenance du projecteur (24) doit être montrée ;
un moyen de connexion (37) destiné à connecter l'électricité au connecteur ou au projecteur (24) de l'unité de table de conférence ; et
un point de fixation (23) comprenant une plaque (25) sur laquelle le projecteur est agencé, ladite plaque (25) est agencée selon un angle (α) par rapport à la surface supérieure ;
**caractérisée par** un bras de support (22) ayant une extrémité à laquelle la plaque (25) est fixée ; et
un dispositif de fixation pour la plaque (25) agencé pour permettre audit angle (α) d'être ajusté au moyen de la plaque (25) qui est rotative en son point de fixation au niveau de ladite extrémité du bras de support (22).

2. Unité de table de conférence (10) selon la revendication 1, **caractérisée en ce que** le miroir (31) est agencé pour effectuer une rotation par rapport à l'unité de table de conférence au moyen d'un moteur (33) qui est commandé par des commandes (32) agencées dans l'unité de table de conférence (10) de telle sorte qu'elles sont accessibles par le biais de l'ouverture dans le dessus de table (42).

3. Unité de table de conférence (10) selon la revendication 1, **caractérisée en ce qu'**elle est au moins partiellement recouverte par un logement (17).

4. Unité de table de conférence (10) selon la revendication 1, **caractérisée en ce qu'**elle est de forme sensiblement rectangulaire.

5. Unité de table de conférence (10) selon la revendication 1, **caractérisée en ce qu'**elle comprend un châssis (16) qui est adapté pour entourer ladite ouverture et pour être raccordé à l'unité de table de conférence (10) à partir du côté supérieur du dessus de table (42).

6. Unité de table de conférence (10) selon la revendication 5, **caractérisée en ce qu'**elle comprend un ou plusieurs capots (36) agencés de manière rotative, dans laquelle le capot ou les capots en position fermée ferment ladite ouverture.

7. Table de conférence (40) comprenant l'unité de table de conférence (10) selon l'une quelconque des revendications 1 à 6, dans laquelle est agencée une ouverture dans la table de conférence (40) dont la forme correspond à la forme de l'unité de table de conférence (10) et sous laquelle l'unité de table de conférence (10) est agencée.
